Europäisches Patentamt

European Patent Office

Office européen des brevets

(19)

(11) Veröffentlichungsnummer : **0 385 164 B1**

(12) **EUROPÄISCHE PATENTSCHRIFT**

(45) Veröffentlichungstag der Patentschrift :
**06.10.93 Patentblatt 93/40**

(21) Anmeldenummer : **90102664.1**

(22) Anmeldetag : **12.02.90**

(51) Int. Cl.⁵ : **B01D 53/36,** B01J 21/06,
B01J 23/20, B01J 23/22,
B01J 23/30, B01J 23/76,
B01J 23/84, B01J 23/85,
B01J 27/18, B01J 37/00

(54) **Katalysator zur selektiven Reduktion von Stickoxiden mit Ammoniak.**

Die Akte enthält technische Angaben, die nach dem Eingang der Anmeldung eingereicht wurden und die nicht in dieser Patentschrift enthalten sind.

(30) Priorität : **28.02.89 DE 3906136**

(43) Veröffentlichungstag der Anmeldung :
**05.09.90 Patentblatt 90/36**

(45) Bekanntmachung des Hinweises auf die Patenterteilung :
**06.10.93 Patentblatt 93/40**

(84) Benannte Vertragsstaaten :
**AT BE CH DE DK ES FR GB IT LI LU NL SE**

(56) Entgegenhaltungen :
**EP-A- 0 220 416
EP-A- 0 319 457
DE-A- 2 846 476
DE-A- 3 531 809
DE-C- 2 458 888
US-A- 4 048 112
US-A- 4 466 947**

(73) Patentinhaber : **Degussa Aktiengesellschaft
Weissfrauenstrasse 9
D-60311 Frankfurt (DE)**

(72) Erfinder : **Brand, Reinhold, Dr.
Gustav-Adolf-Strasse 25
D-6450 Hanau 1 (DE)**
Erfinder : **Engler, Bernd H. Dr.
Treuener Strasse 2
D-6450 Hanau 9 (DE)**
Erfinder : **Honnen, Wolfgang, Dr.
Am Heinichenberg 38
D-6454 Bruchköbel (DE)**
Erfinder : **Koberstein, Edgar, Dr.
Wolfskernstrasse 8
D-8755 Alzenau (DE)**
Erfinder : **Ohmer, Johannes, Dr.
Graf-Stauffenberg-Ring 29
D-6380 Bad Homburg v.d.H. (DE)**

EP 0 385 164 B1

## Beschreibung

Stickoxide, die bei Verbrennungsprozessen entstehen, zählen zu den Hauptverursachern des sauren Regens bzw. des Fotosmogs und der damit einhergehenden Umweltschädigungen. Insbesondere stehen die Stickoxide neben den Fluorchlorkohlenwasserstoffen im Verdacht, für die beobachtete Abnahme der Ozonschicht über den Polregionen verantwortlich zu sein.

Quellen der Stickoxidemission sind der Kraftfahrzeugverkehr, stationäre Verbrennungsmotoren, Kraftwerke, Heizkraftwerke, Dampferzeuger für industrielle Zwecke und industrielle Produktionsanlagen.

Bei Kraftwerken mit Kesselfeuerung kann zwar durch Verwendung sehr reiner Brennstoffe oder durch Optimierung der Verbrennungssysteme (Primärmaßnahmen) eine Absenkung der Stickoxidkonzentration im Abgas erzielt werden, aber diesen feuerungstechnischen Maßnahmen sind sowohl technische als auch ökonomische Grenzen gesetzt. Zur Einhaltung der gesetzlich vorgeschriebenen Emissionsgrenzwerte müssen daher zusätzlich Sekundärmaßnahmen ergriffen werden. Solche Sekundärmaßnahmen zur Stickoxidminderung sind üblicherweise katalytische Reduktionsverfahren, wobei meist Ammoniak als selektiv wirkendes Reduktionsmittel eingesetzt wird.

Es sind bereits eine Vielzahl von Katalysatoren für die reduktive katalytische Stickoxidminderung bekannt. So werden in den deutschen Auslegungsschriften DE-B-12 59 298, DE-B-12 53 685 und DE-B-11 15 230 oxidische Katalysatoren ohne Edelmetall und in der DE-A-22 14 604 oxidische, edelmetallhaltige Katalysatoren beschrieben.

In der DE-C-24 58 888 wird ein weiterer Katalysator beschrieben, der aus einer "innigen Mischung" der nachfolgenden Komponenten besteht:

A) Titan in Form von Oxiden

B) wenigstens ein Metall aus der Gruppe:

B-1 Eisen und Vanadium in Form von Oxiden und/oder der Gruppe

B-2 Molybdän, Wolfram, Nickel, Kobalt, Kupfer, Chrom und Uran in Form von Oxiden

C) Zinn in Form von Oxiden

D) Metalle aus der Gruppe Beryllium, Magnesium Zink, Bor, Aluminium, Yttrium, seltene Erdenelemente, Silizium, Niob, Antimon, Wismut und Mangan in Form von Oxiden.

Die Komponenten liegen in den Atomverhältnissen

A zu B zu C zu D

= 1 zu 0,01 bis 10 zu 0 bis 0,2 zu 0 bis 0,15 vor.

Ein Katalysator dieser Zusammensetzung wird zur Reduktion von sauerstoff- und ammoniakhaltigen Gasmischungen im Temperaturbereich von 150 bis 550° C und bei Raumgeschwindigkeiten von 300 - 100 000 $h^{-1}$ eingesetzt.

Die Herstellung dieser Katalysatoren kann durch an sich bekannte Maßnahmen erfolgen; diese müssen aber immer gewährleisten, daß die Komponenten A) und B) und gegebenenfalls C) als inniges Gemisch in Form ihrer Oxide erhalten werden können. Als typische Beispiele für solche Herstellungsverfahren werden genannt:

1a:     Homogenes Lösungsverfahren

1b:     Copräzipitierungsverfahren

2 :     Gleichzeitige Anwendung von Lösungs- und Präzipitationsverfahren

3 :     Präzipitat-Misch-Verfahren.

Als Vorstufen der Komponenten A), B) und C) werden Lösungen und/oder Präzipitate, wie z. B. Hydroxide oder wasserhaltige Gele verwendet, die zu einer innigen Mischung vermischt und anschließend einer Kalzination unterzogen werden. Dabei werden die Vorläufer pyrolisiert und man erhält das gewünschte innige Gemisch der Oxide der für die Katalyse kritischen Komponenten. Die Kalziniertemperatur soll zwischen 300 und 800° C liegen. Unterhalb 300° C kann ein inniges Gemisch der Oxide und damit ein aktiver Katalysator nicht erhalten werden; oberhalb 800° C findet eine Sinterung statt, was zum Verlust der wirksamen Katalysatoroberfläche führt.

Als Ausgangsmaterial für Titan als Komponente A) werden beispielsweise verschiedene Titansäuren, Titanhydroxid und verschiedene Titansalze, wie Halogenide, Titansulfat, Titanylsulfat und dergleichen verwendet. Auch organische Verbindungen des Titans, beispielsweise Titanalkoxide, können als Ausgangsmaterial für das Titan dienen. Nicht verwendbar ist Titanoxid in der kalzinierten Rutil- oder Anatasform.

Eine Weiterentwicklung dieser in der DE-B-24 58 888 beschriebenen Katalysatorherstellungsverfahren liegt dem in der DE-C-35 31 809 beschriebenen Katalysatormaterial zugrunde. Als Ausgangsmaterial zur Darstellung dieser Katalysatormasse wird Titandioxid verwendet und dieses gemeinsam mit Vanadiumoxid und einem oder mehreren Oxiden der Elemente Wolfram, Molybdän, Phosphor, Chrom, Kupfer, Eisen, Uran vermahlen und danach mindestens einer thermischen Behandlung unterzogen. Dabei sind Wolfram und Molybdän ganz oder teilweise durch Phosphor in Form seiner Oxide oder Phosphate substituiert. Als Mühlen werden

2

Exzenterscheibenmühlen und Ringkammermühlen bevorzugt. Die Kalzinierung erfolgt im Temperaturbereich von 200 bis 900° C.

Bei allen bisher bekannten Katalysatoren dieser Art ist wesentlich, daß die Komponenten A) und B) (z. B. A = Ti; B = W, Mo u. a.) als inniges Gemisch in Form ihrer Oxide vorliegen. Dieses wird dann einem Formgebungsprozeß unterworfen, aus dem die Katalysatoren durch Verpressen oder Extrudieren in Form von Schüttgut oder Monolithen in Wabenform erhalten werden können.

Das bedeutet, daß der Katalysatorformung, beispielsweise der Extrusionsformung, ein Prozeß vorgelagert werden muß, der die Bildung des innigen Gemisches als Ausgangsmaterial zum Ziel hat. Diese zur Zeit übliche Vorgehensweise hat folgende Nachteile:

- Es sind technisch aufwendige, vielstufige, energieintensive Verfahrensschritte nötig;
- Die Herstellung des innigen Gemisches nach DE-B-24 58 888 ist umweltbelastend; es treten Abluft- und Abwasserprobleme auf;
- Der Betrieb von Mühlen zur Mahlaktivierung ist energieintensiv und bedarf aufwendiger Lärmschutzvorkehrungen und Staubschutzeinrichtungen;
- Die vorgeschalteten Verfahrensschritte zur Bildung der innigen Mischung sind ein gravierender Kostenfaktor bei der Katalysatorproduktion.

Der Erfindung liegt daher die Aufgabe zugrunde, durch Einsparung von Verfahrensschritten bei der Herstellung von sog. Vollkatalysatoren (diese bestehen durch und durch aus katalytisch aktiver Masse) zur selektiven Reduktion von Stickoxiden in sauerstoffhaltigen Abgasen in Gegenwart von Ammoniak, eine starke Vereinfachung und damit auch eine deutliche Verbilligung der Katalysatorproduktion zu erreichen. Darüber hinaus soll eine direkte und feinabgestufte Steuerung der Katalysatoreigenschaften durch die Prozeßführung ermöglicht werden.

Diese Aufgabe wird im wesentlichen durch Auswahl bestimmter Titanoxid-Materialien und deren Verarbeitung in einem Knetprozeß gelöst; dabei kann auf die bereits bekannten Maßnahmen zur Gewinnung eines innigen Oxidgemisches verzichtet werden.

Gegenstand der Erfindung ist die in den Ansprüchen zum Ausdruck kommende Lehre.

Geeignete Titanoxide sind reaktive hochoberflächige Titanoxide mit einer spezifischen Oberfläche nach BET von 40 - 500 m$^2$/g, die vollständig oder zum überwiegenden Teil in Anatasform vorliegen. Diese Materialien können durch Fällung oder durch Flammenhydrolyse hergestellte kommerzielle Produkte sein. Die in der Regel hochdispersen Produkte besitzen neben der großen spezifischen Oberfläche ein sehr enges Kornspektrum mit einer mittleren Größe der Primärteilchen in der Größenordnung von 30 nm.

Die einzelnen Elemente der Gruppe B) können beispielsweise in Form folgender Ausgangsverbindungen eingesetzt werden: Wolframoxid, Ammoniumpara- oder metawolframat, Siliziumdioxid, Silicowolframsäure, Kieselsäure, Boroxid, Borsäure, Aluminiumoxid, Phosphoroxid, Ammoniumphosphat, Phosphowolframsäure, Phosphomolybdänsäure, Zirkondioxid, Zirkonphosphat, Bariumoxid, Yttriumoxid, Lanthanoxid, Ceracetat, Cernitrat, Ceroxid, Borwolframsäure, Vanadinoxid, Vanadyloxalat, Ammoniummetavanadat, Vanadowolframsäuren, Vanadomolybdänsäuren, Vanadophosphormolybdänsäuren, Phosphovanadinsäure, Nioboxidhydrat, Nioboxalat, Niobvanadinsäuren, Ammoniummolybdat, Molybdänoxid, Eisenoxid, Eisenphosphat, Eisenhydroxid, organische Eisensalze, wie Eisenoxalat, Kupferacetat, Kupfer(II)oxid, Cu-, Ce-, La-haltige Heteropolysäuren u.a.

Die genannten Substanzen können in Form von Lösungen oder auch als Festsubstanzen eingesetzt werden.

Bei der Fertigung der erfindungsgemäßen Vollkatalysatoren werden neben der eigentlichen Katalysatormasse noch eine Reihe an sich üblicher Zuschlagstoffe benötigt.

Als Befeuchtungsmittel können entsalztes Wasser, wäßrige Ammoniak-Lösung, Monoethanolamin und Alkohole eingesetzt werden.

Als Stützstoffe können z. B. Glasfasern verschiedener Größe Verwendung finden.

Als Bindemittel, welche der herzustellenden Paste nach der Verformung im Zustand des sog. Grünkörpers genügende Stabilität verleihen, sind Cellulosederivate, wie z. B. Carboxymethylcellulose oder auch unsubstituierte Cellulosen, geeignet.

Außerdem kommen Polyethylen, Polypropylen, Polyvinylalkohol, Polyethylenoxid, Polyacrylamid oder Polystyrol als Bindemittel zum Einsatz.

Um ein Verpressen zu erleichtern oder die Extrusionsfähigkeit zu verbessern, werden Verformungs- und/oder Gleit-Hilfsmittel, wie z. B. Bentonite, Tonerden, organische Säuren, Paraffin, Wachse, Siliconöle, zugesetzt.

Schließlich kann auch die Porosität (Porenvolumen, Porenverteilung) der Vollkatalysatoren gezielt durch Zusatz geeigneter Porenbildner eingestellt werden. Solche Substanzen sind z. B. feinteilige Kohlen oder Holzschliff, welche bei den anzuwendenden Kalziniertemperaturen ausbrennen.

Zum intensiven Verkneten der Ausgangsstoffe zu einer homogenen Knetmasse werden Knetaggregate verwendet. Dabei werden Kneter mit Sigma- oder Mastikatorschaufeln bevorzugt. Die erfindungsgemäße Verwendung eines bestimmten Titanoxids in Verbindung mit einem intensiven Knetvorgang zur Aufbereitung der Katalysatormasse, bringen erhebliche Vorteile gegenüber dem bisher üblichen Herstellungsverfahren. So werden technisch aufwendige, umweltbelastende und daher auch teure Verfahrensschritte eingespart. Kopräzipitation und Mahlvorgänge zur Darstellung eines innigen Oxidgemisches entfallen. Dies führt zu einer deutlichen Verbilligung der Produktion und beseitigt gleichzeitig die Abhängigkeit von aufwendig hergestellten Ausgangsmaterialien.

Hinzu kommt, daß eine gezielte Einstellung der Schwindung, einem entscheidenden Parameter für die Rißbildungstendenz und die Bruchfestigkeit von Vollkatalysatoren, durch den Einsatz geeigneter Ausgangsmaterialien und durch Anpassung des Knetvorganges hinsichtlich Intensität, Temperatur und Zeit inklusive zwischengeschalteter Temperschritte möglich ist (vgl. Ansprüche 3 - 5).

Desweiteren gewährleistet das neue Katalysatorherstellungsverfahren durch die Einsparung mehrerer Prozeßschritte eine direktere und zugleich flexiblere Steuerung der Katalysatoreigenschaften. So läßt sich durch die Wahl einer geeigneten Stabilisatorkomponente aus der Reihe $B_1$) die Sinterbeständigkeit der Katalysatoren verbessern. Dies ist daraus erkennbar, daß die auf hohem Niveau befindliche BET-Oberfläche des fertigen Katalysators im praktischen Betrieb nahezu konstant bleibt und daß die temperaturinduzierte Phasenumwandlung des Titandioxids von der Anatas- in die Rutil-Modifikation unterdrückt wird. Aus diesen Eigenschaften resultieren unmittelbar deutlich längere Standzeiten der nach den Patentansprüchen erhältlichen Katalysatoren.

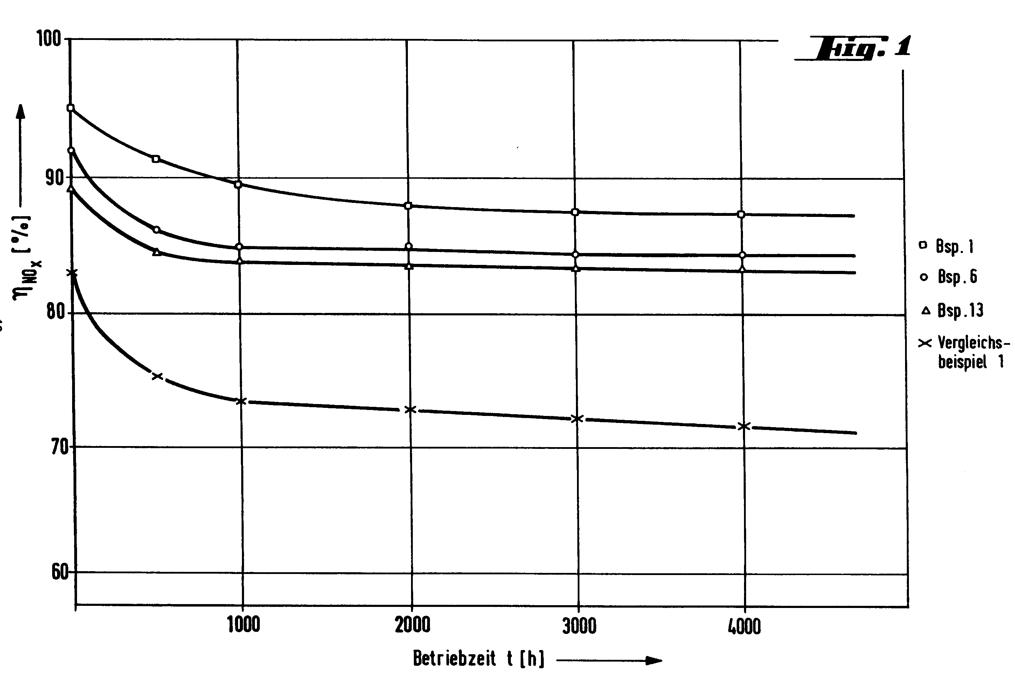

Figur 1 (für Beispiel 13) veranschaulicht die Verringerung des Aktivitätsabfalls beim Langzeiteinsatz in Rauchgasen von Steinkohlen-Trockenfeuerungen mit Betriebstemperaturen über 300° C, wenn im Katalysator als Stabilisator $SiO_2$ verwendet wird.

Über die physikalisch-chemischen Eigenschaften der Ausgangsmaterialien ($TiO_2$-Anatas, Stabilisatoren aus der Reihe $B_1$), Aktivatoren aus der Reihe $B_2$) sowie über die Wahl der weiteren Zusätze und die erfindungsgemäße Verarbeitung im Kneter, lassen sich bei einer gegebenen Knetmasse durch empirische Variation des Feuchtigkeitsgehalts derselben während des Knetvorgangs, Porenvolumen und Porenradienverteilung steuern. Die Porenradienverteilung kann in weiten Grenzen innerhalb des Meso- und Makroporenbereiches variiert werden, wobei mono-, bi- und trimodale Porenradienverteilungen sowie Übergangsformen zwischen diesen gezielt einstellbar sind. Die richtige Wahl dieser Parameter führt zu einer erheblichen Steigerung der katalytischen Aktivität. Die Porenverteilung und das Porenvolumen haben aber auch einen entscheidenden Einfluß auf die Vergiftungsresistenz und damit unmittelbar auf die Katalysatorstandzeiten.

In diesem Zusammenhang kommt auch dem pK-Wert der Festkörperoberfläche besonderes Gewicht zu. Der pK-Wert läßt sich bei dem erfindungsgemäßen Katalysator durch Auswahl der Stabilisatoren oder Aktivatoren stark verändern. Hier ist insbesondere der Einsatz von Heteropolysäuren als Aktivatoren und/oder Stabilisatoren zu nennen. Interessanterweise wurde gefunden, daß gerade Katalysatoren, die aus diesen Materialien gefertigt werden, beim Einsatz in den besonders problematischen Rauchgasen von Steinkohle-Schmelzkammerfeuerungen z. B. im Vergleich zu Katalysatoren entsprechend der DE-PS 24 58 888 eine deutlich geringere Tendenz zur Anreicherung von Arsen und anderen Störstoffen (Katalysatorgiften) aufweisen. Dies ist auf die erhöhte Vergiftungsresistenz infolge verminderter Schwermetalladsorption an der Katalysatoroberfläche zurückzuführen. Dadurch wird der Einsatz von Katalysatoren im "High-Dust-Betrieb" von Steinkohle-Schmelzkammerfeuerungen mit technisch sinnvollen Standzeiten ermöglicht. Die bekannten Vergleichskatalysatoren unterliegen demgegenüber einer raschen Desaktivierung, die vornehmlich durch im Rauchgas vorhandene Schwermetalle hervorgerufen wird.

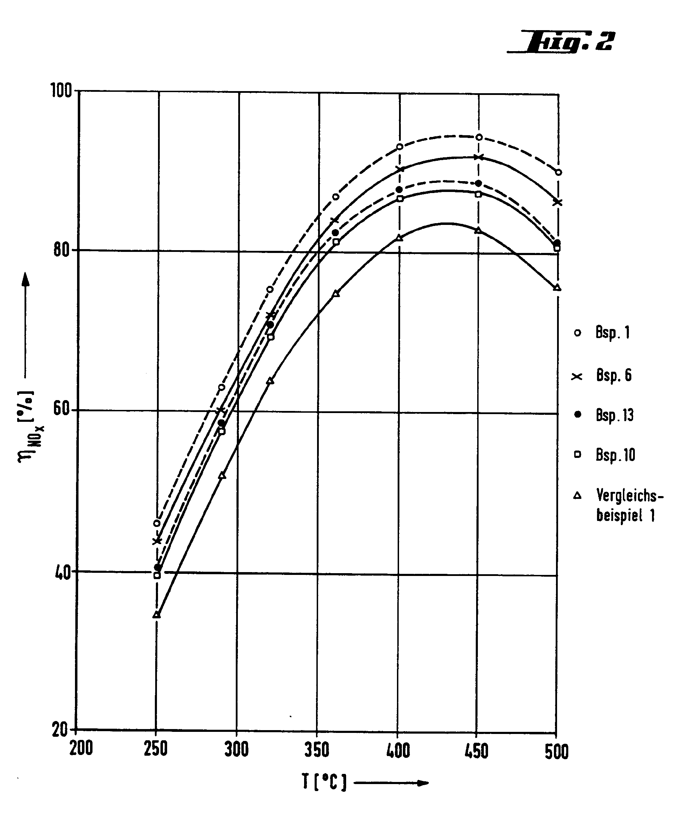

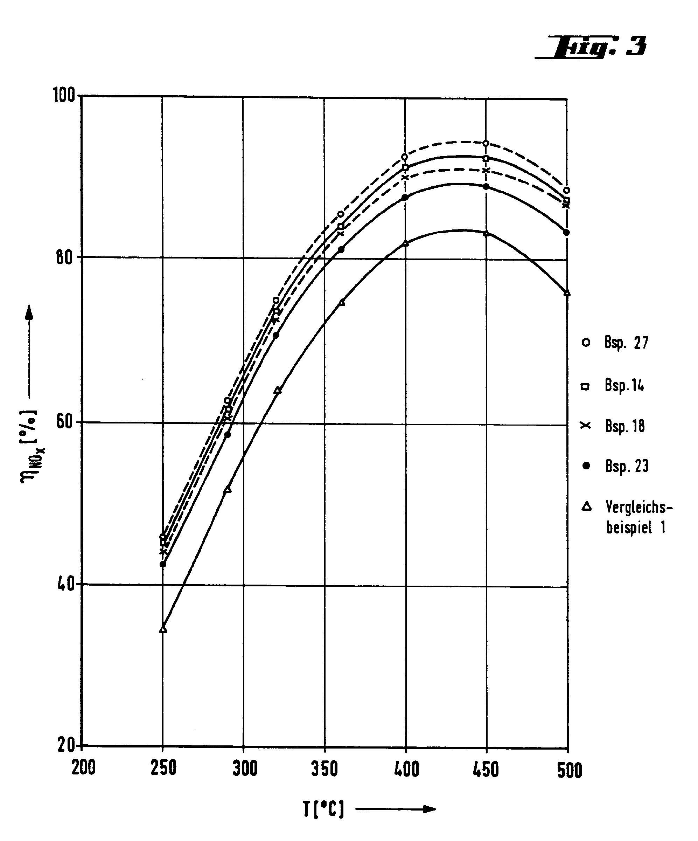

Figur 2 und Figur 3 zeigen die überraschend große Aktivitätserhöhung von Katalysatoren gemäß der Erfindung im Vergleich zu einem herkömmlich gemäß Vergleichsbeispiel 1 hergestellten Katalysator.

Die Erfindung wird nachfolgend anhand von Ausführungsbeispielen weiter erläutert.

Die Katalysatortestung wurde sowohl in staubfreien Modellabgasen in einer Labortestanlage als auch im Abgas einer Ölfeuerungsanlage vorgenommen. Zudem wurden Langzeittests im Rauchgas einer Steinkohlen-Trockenfeuerung durchgeführt.

Die Katalysatortests wurden im Temperaturbereich von 200 - 500° C durchgeführt. Die Raumgeschwindigkeiten betrugen dabei zwischen 10000 und 40000 $h^{-1}$. Es wurde jeweils das als günstig befundene Molverhältnis zwischen dem Reduktionsmittel Ammoniak und dem Stickoxid von 0,6 - 1,6, vorzugsweise 0,8 - 1,2 angewendet.

Vergleichsbeispiel

35 kg eines gemäß der DE-PS 24 58 888 hergestellten innigen Gemisches der Oxide $TiO_2$ und $WO_3$ im Gewichtsverhältnis 9 : 1 werden mit 20 Liter entsalztem Wasser, 6 kg 15 Gew.-%iger wäßriger $NH_3$-Lösung, 1,8 kg Monoethanolamin und mit einer Lösung von Ammoniummetavanadat entsprechend 350 g $V_2O_5$ versetzt.

Die Mischung wird bei variierendem Feuchtegehalt und Temperaturen zwischen 70 und 90° C intensiv geknetet. Anschließend werden nacheinander 620 g SiO$_2$, 1,4 kg alkalifreier Ton und 3,5 kg Glasfasern (Länge 1 - 8 mm) zugesetzt. Die Mischung wird 6 - 8 Stunden zu einer homogenen Knetmasse verknetet, wobei zur Einstellung der für die nachfolgende Verformung nötigen Plastizität zusätzlich 410 g Polyethylenoxid, 410 g Carboxymethylcellulose, 230 g Milchsäure und 11,5 kg vollentsalztes Wasser zugegeben werden.

Mit Hilfe eines Extruders wird die Katalysatormasse dann zu monolithischen Wabenkörpern mit Kanälen von quadratischem Querschnitt (Zellteilung: 3,4 mm oder 7,4 mm) extrudiert.

Die Formkörper werden in einer Klimatrockenkammer bei ansteigender Temperatur im Bereich von 20 - 60° C getrocknet und abschließend nach stufenweiser Anhebung der Temperatur 24 Stunden bei 620° C kalziniert.

Beispiele 1 - 9

Die Zusammensetzung des Katalysators geht jeweils aus Tabelle 1 hervor. Grundsätzlich wurde zur Bereitung der Katalysatoren wie folgt vorgegangen:

35 kg des in Anspruch 1 genannten TiO$_2$-Anatas mit einer BET-Oberfläche von 98 m$^2$/g werden mit 4,4 kg Ammoniumparawolframat (APW), 22 Liter entsalztem Wasser, 7,5 kg 15 Gew.-%iger wäßriger NH$_3$-Lösung, 1,8 kg Monoethanolamin und mit einer Lösung von Ammoniummetavanadat entsprechend 390 g V$_2$O$_5$ versetzt. Unter intensivem Kneten im Temperaturbereich von 60 - 90° C werden weiterhin nacheinander 670 g SiO$_2$, 2,5 kg Glasfasern (Länge 1 - 8 mm) und 1,5 kg alkalifreier Ton zugesetzt. Die Mischung wird 5 - 7 Stunden zu einer homogenen Knetmasse verknetet (Werner & Pfleiderer-Kneter LUK 2.5), wobei zur Einstellung der Plastizität zusätzlich 450 g Polyethylenoxid, 450 g Carboxymethylcellulose, 250 g Milchsäure und 12,3 Liter entsalztes Wasser zugegeben werden. Zur Feinabstimmung des Feuchtegehalts und der Plastizität der Knetmasse wurde es erforderlich, vor dem Ende der Knetung weiteres Ammoniakwasser zuzusetzen. Mit einem Extruder wird die Katalysatormasse dann zu monolithischen Wabenkörpern mit Kanälen von quadratischem Querschnitt (Zellteilung: 3,4 mm) verpreßt. Nach Trocknung bei ansteigender Temperatur von 20 - 60° C in einer Klimatrockenkammer werden die Formkörper nach stufenweiser Anhebung der Temperatur 24 Stunden bei 620° C kalziniert.

In den Beispielen 6 - 9 wurden anstelle von TiO$_2$-Anatas bzw. Ammoniumparawolframat (APW) bzw. Ammoniummetavanadat (AMV) flammenhydrolytisch hergestelltes TiO$_2$-P-25 (Degussa) bzw. Wolframoxid, Boroxid bzw. Nb$_2$O$_5$, letzteres eingesetzt als in Wasser gelöstes Nioboxalat, eingesetzt.

## Tabelle 1

| Bsp. | Komp. A | Komp. B$_1$ | Gewichtsverh. A-Oxid/B$_1$-Oxid | | Komp. B$_2$ | Anteil B$_2$-Oxid in g/100g A-B$_1$-Mischoxid |
|------|---------|-------------|------|------|-------------|------|
| 1 | Anatas | APW | 9 : | 1 | AMV | 1,0: |
| 2 | Anatas | APW | 9,5 : | 0,5 | AMV | 1,0 |
| 3 | Anatas | APW | 9,9 : | 0,1 | AMV | 1,0 |
| 4 | Anatas | APW | 9 : | 1 | AMV | 0,5 |
| 5 | Anatas | APW | 9 : | 1 | AMV | 3,0 |
| 6 | Anatas | WO$_3$ | 9 : | 1 | AMV | 1,0 |
| 7 | P-25 | WO$_3$ | 9 : | 1 | AMV | 1,0 |
| 8 | Anatas | B$_2$O$_3$ | 9,7 : | 0,3 | AMV | 1,0 |
| 9 | Anatas | APW | 9 : | 1 | Nb$_2$(C$_2$O$_4$)$_5$ | 2,5 |

Beispiele 10 - 13

35 kg des in Anspruch 1 genannten $TiO_2$-Anatas mit einer BET-Oberfläche von 75 m²/g werden im laufenden Kneter mit 4,4 kg Ammoniumparawolframat (APW) und 10 kg 15 Gew.-%iger wäßriger $NH_3$-Lösung versetzt. Die dabei erhaltene Suspension wird bei 80° C 3 Stunden lang bis zur Trockenheit (Restfeuchte 5 - 10 Gew.-%) geknetet. Anschließend wird das so erhaltene Gemisch mit 22 Liter entsalztem Wasser, 75 kg 15 Gew.-%iger wäßriger $NH_3$-Lösung, 1,8 kg Monoethanolamin und mit einer Lösung von Ammoniummetavanadat (AMV) entsprechend 390 g $V_2O_5$ versetzt. Diese Masse wird wie bei den Beispielen 1 - 9 beschrieben weiterverarbeitet und zu den selben Wabenkörpern extrudiert. Die Trocknung und Kalzinierung der Monolithe erfolgt ebenfalls analog zu der in den Beispielen 1 - 9 beschriebenen Methode.

In Beispiel 11 gemäß Tabelle 2 wurde das Ammoniummetavanadat durch Ammoniummolybdat (AM), in den Beispielen 12 und 13 das Ammoniumparawolframat durch BaO oder $SiO_2$ ersetzt.

**Tabelle 2**

| Bsp. | Komp. A | Komp. $B_1$ | Gewichtsverh. A-Oxid/$B_2$-Oxid | | | Komp. $B_2$ | Anteil $B_2$-Oxid in g/100g A-$B_1$-Mischoxid |
|------|---------|-------------|------|------|------|-------------|------|
| 10 | Anatas | APW | 9 | : | 1 | AMV | 1,0 |
| 11 | Anatas | APW | 9 | : | 1 | AM | 3,0 |
| 12 | Anatas | BaO | 9,5 | : | 0,5 | AMV | 1,0 |
| 13 | Anatas | $SiO_2$ | 9 | : | 1 | AMV | 1,0 |

Beispiele 14 - 17

35 kg des in Anspruch 1 genannten $TiO_2$-Anatas mit einer BET-Oberfläche von 40 m²/g werden mit 4,0 kg Aluminiumoxid und 12 kg 15 Gew.-%iger wäßriger $NH_3$-Lösung versetzt. Die Paste wird bei 80° C 2 - 3 Stunden lang bis zu einer Restfeuchte zwischen 5 - 10 Gew.-% geknetet. Anschließend wird das Pulver bei 400° C 2 Stunden lang vorkalziniert.

Das vorkalzinierte Oxidgemisch wird im Kneter mit 22 Liter entsalztem Wasser, 75 kg 15 Gew.-%iger wäßriger $NH_3$-Lösung, 2,0 kg Monoethanolamin, 210 g Pulp (grobfaserige Cellulose) und dann erst mit einer Lösung von Ammoniummetavanadat entsprechend 390 g $V_2O_5$ versetzt. Unter intensivem Kneten bei 60 - 90° C werden zusätzlich 2,3 kg alkalifreier Ton, 2,2 kg Glasfasern (Länge 1 - 8 mm), 200 g Polyethylenoxid, 200 g Carboxymethylcellulose und 250 g Milchsäure zugegeben. Die Mischung wird 5 - 7 Stunden zu einer homogenen Knetmasse verknetet, wobei zur Einstellung der Plastizität weiteres Ammoniakwasser zugesetzt wird. Mit einem Extruder wird die Katalysatormasse schließlich zu Wabenkörpern mit quadratisch konfigurierten Kanälen (Zellteilung: 7,4 mm) verpreßt. Nach Trocknung mit ansteigenden Temperaturen (20 - 60° C) in einer Klimatrockenkammer werden die Formkörper nach stufenweiser Anhebung der Temperatur 24 Stunden bei 700° C kalziniert.

In den Beispielen 15 - 17 wurde anstelle von Aluminiumoxid entsprechend Tabelle 3 Ammoniumparawolframat oder Lanthanoxid und in Beispiel 16 anstelle von Ammoniummetavanadat in Wasser gelöstes Kupfer(II)acetat zugesetzt.

Tabelle 3

| Bsp. | Komp. A | Komp. $B_1$ | Gewichtsverh. A-Oxid/$B_1$-Oxid | | | Komp. $B_2$ | Anteil $B_2$-Oxid in g/100g A-$B_1$-Mischoxid |
|------|---------|-------------|------|---|------|-------------|--------------------------------|
| 14 | Anatas | $Al_2O_3$ | 9 | : | 1 | AMV | 1,0 |
| 15 | Anatas | APW | 9 | : | 1 | AMV | 1,0 |
| 16 | Anatas | APW | 9,5 | : | 0,5 | $Cu(CH_3COO)_2$ | 1,5 |
| 17 | Anatas | $La_2O_3$ | 9,5 | : | 0,5 | AMV | 1,0 |

Beispiele 18 - 21

35 kg des in Anspruch 1 genannten $TiO_2$-Anatas mit einer BET-Oberfläche von 280 m²/g werden mit 4,0 kg Zirkoniumoxid, 390 g $V_2O_5$ und 15 kg 15 Gew.-%iger wäßriger $NH_3$-Lösung versetzt. Die dünnflüssige Paste wird bei 80° C 2 - 4 Stunden lang bis zu einer Restfeuchte von 5 - 10 Gew.-% geknetet. Das trockene Pulver wird anschließend bei 700° C 2 Stunden vorkalziniert.

Das vorkalzinierte Gemisch wird mit 25 kg vollentsalztem Wasser, 75 kg 15 Gew.-%iger $NH_3$-Lösung und 2,0 kg Monoethanolamin versetzt und analog Beispielen 1 - 9 weiterverarbeitet. Die fertige Katalysatormasse wird wie bei Beispielen 14 - 17 zu Wabenkörpern extrudiert.

In den Beispielen 19 - 21 wurde gemäß Tabelle 4 Zirkoniumdioxid durch Ammoniumparawolframat oder Phosphorpentoxid und in Beispiel 20 $V_2O_5$ durch Eisen(III)oxid ersetzt.

Tabelle 4

| Bsp. | Komp. A | Komp. $B_1$ | Gewichtsverh. A-Oxid/$B_1$-Oxid | | | Komp. $B_2$ | Anteil $B_2$-Oxid in g/100g A-$B_1$-Mischoxid |
|------|---------|-------------|------|---|------|-------------|--------------------------------|
| 18 | Anatas | $ZrO_2$ | 9 | : | 1 | $V_2O_5$ | 1,0 |
| 19 | Anatas | APW | 9 | : | 1 | $V_2O_5$ | 1,0 |
| 20 | Anatas | APW | 9 | : | 1 | $Fe_2O_3$ | 1,0 |
| 21 | Anatas | $P_2O_5$ | 9,5 | : | 0,5 | $V_2O_5$ | 1,0 |

Beispiele 22 - 26

35 kg des in Anspruch 1 angeführten $TiO_2$-Anatas mit einer BET-Oberfläche von 98 m²/g werden mit 422 g Ammonium-2-hydrogen-12-vanadophosphat und mit 28 Liter entsalztem Wasser versetzt.

Die Masse wird bei Temperaturen von 40 - 70° C intensiv geknetet, wobei zusätzlich 670 g $SiO_2$, 2,5 kg Glasfasern (Länge 1 - 8 mm) und 6,0 kg alkalifreier Ton zugegeben werden. Zur Einstellung der Plastizität werden außerdem 450 g Polyethylenoxid, 900 g Carboxymethylcellulose, 250 g Milchsäure und 15 Liter entsalztes Wasser zugesetzt.

Die Mischung wird 5 - 7 Stunden zu einer homogenen Knetmassen verknetet und entsprechend den Beispielen 1 - 9 zu Wabenkörpern verarbeitet.

Gemäß Tabelle 5 wurde in den Beispielen 23 - 26 das Ammonium-2-hydrogen-12-vanadophosphat durch folgende Heteropolysäuren ersetzt:

## Tabelle 5

| Bsp. | Komp. A | Komp. $B_1 + B_2$ | Gewichtsverh. $A-Oxid / B_2^2-Oxid$ | | |
|------|---------|-------------------|--------|---|------|
| 22 | Anatas | $(NH_4)_5H_2[P(V_{12}O_{36})]$ | 9,99 | : | 0,01 |
| 23 | Anatas | $(NH_4)_8[V_6W_6O_{37}]$ | 9,9 | : | 0,1 |
| 24 | Anatas | $H_4[P(Mo_{11}VO_{40})]$ | 9,99 | : | 0,01 |
| 25 | Anatas | $H_6[P(Mo_9V_3O_{40})]$ | 9,99 | : | 0,01 |
| 26 | Anatas | $(NH_4)_6H[P(Mo_{11}CuO_{40})]$ | 9,99 | : | 0,01 |

Beispiele 27 - 31

35 kg des in Anspruch 1 genannten $TiO_2$-Anatas mit einer BET-Oberfläche von 98 m²/g werden mit 4,3 kg Ammoniumparawolframat, 22 Liter entsalztem Wasser, 7,5 kg 15 Gew.-%iger wäßriger $NH_3$-Lösung und 1,8 kg Monoethanolamin versetzt. Die Masse wird entsprechend den Beispielen 1 - 9 mit Zusätzen (Plastifizierer, Stützstoffe usw.) versehen, intensiv geknetet (2 - 7 Stunden bei 60 - 90° C) und zu Wabenkörpern, die hier als Katalysatorvorstufe gelten, extrudiert. Letztere werden analog den Beispielen 1 - 9 getrocknet und kalziniert und nach dem Abkühlen (gemäß Anspruch 7) mit 1,0/g Vanadiumpentoxid pro 100 g Titandioxid/Wolframoxid-Gemisch durch Imprägnieren mit einer Lösung von Ammonium-2-hydrogen-12-vanadophosphat in einer der Wasseraufnahmekapazität des Wabenkörpers entsprechenden Menge Wassers aufgebracht. Die Trocknung erfolgt unter Luftdurchströmung bei 150° C. die abschließende Temperung wird bei 400° C 2 Stunden durchgeführt.

In den Beispielen 28 - 31 wurden anstelle von Ammoniumparawolframat bzw. Ammonium-2-hydrogen-12-vanadophosphat entsprechend der in Tabelle 6 angegebenen Mengenverhältnisse Ammoniummetawolframat, Yttriumoxid, Zirkondioxid oder Siliziumdioxid bzw. $V_2O_5$ (als wäßrige Lösungen von Vanadiumoxalat), Ammonium-6-Wolframato-6-vanadat oder 11-Molybdo-1-vanadophosphorsäure verwendet.

Tabelle 6

| Bsp. | Komp. A | Komp. B$_1$ | Gewichtsverh. A-Oxid/B$_1$-Oxid | Komp. B$_2$ | Anteil B$_2$-Oxid in g/100g A-B$_1$ Mischoxid |
|---|---|---|---|---|---|
| 27 | Anatas | APW | 9 : 1 | $(NH_4)_5H_2[P(V_{12}O_{36})]$ | 1,0 |
| 28 | Anatas | AMW | 9 : 1 | $V_2(C_2O_4)_5$ | 1,0 |
| 29 | Anatas | Y$_2$O$_3$ | 9,8 : 0,2 | $V_2(C_2O_4)_5$ | 1,0 |
| 30 | Anatas | ZrO$_2$ | 9 : 1 | $(NH_4)_8[V_6W_6O_{37}]$ | 1,0 |
| 31 | Anatas | SiO$_2$ | 9 : 1 | $H_4[P(Mo_{11}VO_{40})]$ | 1,0 |

Prüfung der hergestellten Katalysatoren

Die entsprechend den Beispielen 1 - 31 präparierten Katalysatoren wurden im Abgas einer Ölfeuerung getestet, welches durch Zudosierung von zusätzlichen Schadstoffkomponenten ($NO_x$ und $SO_2$) und von zur Stickoxidreduktion erforderlichem Ammoniak gemäß den unten angegebenen Testbedingungen eingestellt wurde.

9

Testbedingungen:

Abgaszusammensetzung: $NO_x$ 800 ppm

$NH_3$ 800 ppm

$SO_2$ 500 ppm

$O_2$ 5,0 Vol.%

$H_2O$ 11,0 Vol.%

$CO_2$ 12,0 Vol.%

$N_2$ Rest

Die Katalysatortests wurden im Temperaturbereich 250 - 500° C und bei einer Raumgeschwindigkeit von $20\,000\ h^{-1}$ durchgeführt. Ausgewählte Ergebnisse der Messungen sowie Langzeittests in Steinkohlen-Trockenfeuerungen unter den bereits genannten Bedingungen sind in den Graphiken Figuren 1 , 2 und 3 gezeigt. Die zugrunde liegenden Meßwerte sind in den Tabellen 7 und 8 zusammengefaßt.

EP 0 385 164 B1

Tabelle 7*

| Beispiel Nr. T | 1 | 6 | 10 | 13 | 14 | 18 | 23 | 27 | Vergleichs-probe |
|---|---|---|---|---|---|---|---|---|---|
| 250 | 46,0 | 43,8 | 39,5 | 40,5 | 45,2 | 44,2 | 42,5 | 45,8 | 34,5 |
| 290 | 63,1 | 60,1 | 57,5 | 58,5 | 62,7 | 60,5 | 67,6 | 62,7 | 52,0 |
| 320 | 75,7 | 72,2 | 69,4 | 71,1 | 73,5 | 72,5 | 70,7 | 74,9 | 63,9 |
| 360 | 86,0 | 84,1 | 81,3 | 82,6 | 84,0 | 83,0 | 81,1 | 85,4 | 74,7 |
| 400 | 93,4 | 90,6 | 87,0 | 88,2 | 91,5 | 89,9 | 87,5 | 92,7 | 81,8 |
| 450 | 94,3 | 92,3 | 87,8 | 89,0 | 92,4 | 91,1 | 88,4 | 94,0 | 83,1 |
| 500 | 90,4 | 86,6 | 80,8 | 81,5 | 87,5 | 86,6 | 83,3 | 88,5 | 76,0 |

* Die angegebenen Werte sind $NO_x$-Umsätze ($\eta_{NO_x}$) in Prozent bezogen auf die $NO_x$-Ausgangskonzentration

<u>Tabelle 8</u> *

| t[h] | SK-TF (T=450° C) | | | |
| --- | --- | --- | --- | --- |
| | Beispiele | | | Vergleichsprobe |
| | 1 | 6 | 13 | |
| Nullmessung | 95 | 92 | 89 | 83 |
| 500 | 91,5 | 86 | 84,5 | 75,5 |
| 1000 | 89,5 | 85 | 84 | 73,5 |
| 2000 | 88 | 85 | 83,5 | 73 |
| 3000 | 88 | 84,5 | 83,5 | 72,5 |
| 4000 | 87,5 | 84,5 | 83,5 | 71,5 |

* Die angegebenen Werte sind $NO_x$-Umsätze ($\eta_{NO_x}$) in

Prozent, bezogen auf die $NO_x$-Ausgangskonzentration

**Patentansprüche**

1. Katalysator zur selektiven Reduktion von Stickoxiden mit Ammoniak, enthaltend die Komponenten
   A) Titanoxid
   $B_1$) mindestens ein Oxid von Wolfram, Silicium Bor, Aluminium, Phosphor, Zirkonium,. Barium, Yttrium, Lanthan, Cer und
   $B_2$) mindestens ein Oxid von Vanadium, Niob, Molybdän, Eisen, Kupfer,
   mit einem Atomverhältnis zwischen den Elementen der Komponenten A) und B) von 1 : 0,001 bis 1, vorzugsweise 1 : 0.002 bis 0,4,
   **dadurch erhältlich,**
   daß man die Komponente A) in Form eines reaktiven hochoberflächigen Titanoxids mit einer BET-Oberfläche von 40 - 500, vorzugsweise 50 - 300, insbesondere 75 - 150 $m^2$/g, das vollständig oder zum überwiegenden Teil in der Anatasmodifikation vorliegt, zusammen mit den Komponenten $B_1$) und $B_2$), vorzugsweise ihren Vorstufen, unter Zusatz der für eine Verpressung bzw. Extrusion keramischer Massen üblichen Zusatzstoffe Befeuchtungsmittel, Stützstoff, Bindemittel, Verformungshilfsmittel und gegebenenfalls Porenbildner, intensiv zu einer homogenen Knetmasse verknetet, die Knetmasse zu Formkörpern extrudiert, die Formkörper unter langsamer Temperaturerhöhung bis höchstens 60° C trocknet und sie dann unter stufenweiser Erhöhung der Temperatur in Umgebungsluft bei im Bereich von 300 - 800° C liegenden Endtemperaturen kalziniert.

2. Katalysator nach Anspruch 1,
   **dadurch erhältlich,**

daß als Ausgangsmaterial für die Komponenten $B_1$) und $B_2$) Hydroxide, Oxide, Salze oder Heteropolysäuren oder deren Salze, vorzugsweise Ammoniumsalze, eingesetzt werden.

3. Katalysator nach Anspruch 1 oder 2,
   **dadurch erhältlich,**
   daß die Komponente A) und die Komponente $B_1$) im Kneter vermischt und bei pH 7 - 11, vorzugsweise 8 - 10 auf eine Restfeuchte von 3 - 12, vorzugsweise 5 - 10 Gew.-% trocken vorgeknetet werden, bevor die Komponente $B_2$) zugesetzt wird.

4. Katalysator nach Anspruch 3,
   **dadurch erhältlich,**
   daß das trocken vorgeknetete Gemisch der Komponenten A) und $B_1$) bei Temperaturen von 400 - 700° C vorkalziniert wird, bevor die Komponente $B_2$) zugesetzt wird.

5. Katalysator nach den Ansprüchen 1 bis 3,
   **dadurch erhältlich,**
   daß die aus den Komponenten A), $B_1$) und $B_2$) bestehende Masse bei 300 - 800, vorzugsweise 400 - 700° C vorkalziniert wird, bevor diese zu einer homogenen Knetmasse verknetet wird.

6. Katalysator nach den Ansprüchen 1 bis 5,
   **dadurch erhältlich,**
   daß die Komponenten $B_1$) und $B_2$) in Form einer Heteropolysäure bzw. eines ihrer Salze, vorzugsweise der Ammoniumsalze eingesetzt werden, wobei die in der Heteropolysäure vorhandenen Metalle aus den Gruppen $B_1$) und $B_2$) im Atomverhältnis von 12 : 1 bis 1 : 12 vorliegen.

7. Katalysator nach Anspruch 1 oder 2,
   **dadurch erhältlich,**
   daß das Ausgangsmaterial für die Komponente $B_2$) dem Knetprozeß entzogen bleibt und in Form eines Salzes oder einer Heteropolysäure oder eines ihrer Salze, vorzugsweise der Ammoniumsalze, in wäßriger Lösung durch Imprägnierung auf die aus den Komponenten A) und $B_1$) bestehende, vorzugsweise kalzinierte Katalysatorvorstufe aufgebracht wird.

8. Verfahren zur Herstellung eines Katalysators zur selektiven Reduktion von Stickoxiden mit Ammoniak, enthaltend die Komponenten
   A) Titanoxid
   $B_1$) mindestens ein Oxid von Wolfram, Silicium, Bor, Aluminium, Phosphor, Zirkonium, Barium, Yttrium, Lanthan, Cer und
   $B_2$) mindestens ein Oxid von Vanadium, Niob, Molybdän, Eisen, Kupfer
   mit einem Atomverhältnis zwischen den Elementen der Komponenten A) und B) von 1 : 0,001 bis 1, vorzugsweise 1 : 0,002 bis 0,4
   **dadurch gekennzeichnet,**
   daß man die Komponente A) in Form eines reaktiven hochoberflächigen Titanoxids mit einer BET-Oberfläche von 40 - 500, vorzugsweise 50 - 300, insbesondere 75 - 150 m²/g, das vollständig oder zum Überwiegenden Teil in der Anatasmodifikation vorliegt, zusammen mit den Komponenten $B_1$) und $B_2$), vorzugsweise ihren Vorstufen, unter Zusatz der für eine Verpressung bzw. Extrusion keramischer Massen üblichen Zusatzstoffe Befeuchtungsmittel, Stützstoff, Bindemittel, Verformungshilfsmittel und gegebenenfalls Porenbildner, intensiv zu einer homogenen Knetmasse verknetet, die Knetmasse zu Formkörpern extrudiert, die Formkörper unter langsamer Temperaturerhöhung bis höchstens 60° C trocknet und sie dann unter stufenweiser Erhöhung der Temperatur in Umgebungsluft bei im Bereich von 300 - 800° C liegenden Endtemperaturen kalziniert.

9. Verfahren nach Anspruch 8,
   **dadurch gekennzeichnet,**
   daß als Ausgangsmaterial für die Komponenten $B_1$) und $B_2$) Hydroxide, Oxide, Salze oder Heteropolysäuren oder deren Salze, vorzugsweise Ammoniumsalze, eingesetzt werden.

10. Verfahren nach Anspruch 8 oder 9,
    **dadurch gekennzeichnet,**
    daß die Komponente A) und die Komponente $B_1$) im Kneter vermischt und bei pH 7 - 11, vorzugsweise 8 - 10 auf eine Restfeuchte von 3 - 12, vorzugsweise 5 - 10 Gew.-% trocken verknetet werden, bevor die Komponente B$_2$) zugesetzt wird.

**11.** Verfahren nach Anspruch 10,
**dadurch gekennzeichnet,**
daß das trocken vorgeknetete Gemisch der Komponenten A) unde B$_1$) bei Temperaturen von 400 - 700° C vorkalziniert wird, bevor die Komponente B$_2$) zugesetzt wird.

**12.** Verfahren nach den Ansprüchen 8 bis 10,
**dadurch gekennzeichnet,**
daß die aus den Komponenten A), B$_1$) und B$_2$) bestehende Masse bei 300 - 800, vorzugsweise 400 - 700° C vorkalziniert wird, bevor diese zu einer homogenen Knetmasse verknetet wird.

**13.** Verfahren nach den Ansprüchen 8 bis 12,
**dadurch gekennzeichnet,**
daß die Komponentenm B$_1$) und B$_2$) in Form einer Heteropolysäure bzw. eines ihrer Salze, vorzugsweise der Ammoniumsalze, eingesetzt werden, wobei die in der Heteropolysäure vorhandenen Metalle aus den Gruppen B$_1$) und B$_2$) im Atomverhältnis von 12 : 1 bis 1 : 12 vorliegen.

**14.** Verfahren nach Anspruch 8 oder 9,
**dadurch gekennzeichnet,**
daß das Ausgangsmaterial für die Komponente B$_2$) dem Knetprozeß entzogen bleibt und in Form eines Salzes oder einer Heteropolysäure oder eines ihrer Salze, vorzugsweise der Ammoniumsalze, in wäßriger Lösung durch Imprägnierung auf die aus den Komponenten A) und B$_1$) bestehende, vorzugsweise kalzinierte Katalysatorvorstufe aufgebracht wird.

## Claims

**1.** A catalyst for the selective reduction of nitrogen oxides with ammonia containing the following components:

A) titanium oxide

B$_1$) at least one oxide of tungsten, silicon, boron, aluminium, phosphorus, zirconium, barium, yttrium, lanthanum, cerium and

B$_2$) at least one oxide of vanadium, niobium, molybdenum, iron, copper,

with an atomic ratio between the elements of components A) and B) of 1 : 0.001 to 1 and preferably 1 : 0.002 to 0.4, obtainable by intensively kneading component A) in the form of a reactive high-surface titanium oxide having a BET surface of 40 to 500, preferably 50 to 300 and more preferably 75 to 150 m$^2$/g, which is completely or predominantly present in the anatase modification, together with components B$_1$) and B$_2$), preferably their precursors, with addition of the additives typically used for the compression moulding or extrusion of ceramic pastes, moistening agents, supporting substances, binders, moulding aids and, optionally, pore-forming agents, to form a homogeneous kneaded paste, extruding the kneaded paste to mouldings, drying the mouldings with a gradual increase in temperature to at most 60°C and then calcining them with a stepwise increase in temperature in ambient air at final temperatures in the range from 300 to 800°C.

**2.** A catalyst as claimed in claim 1, obtainable by using hydroxides, oxides, salts or heteropoly acids or salts thereof, preferably ammonium salts, as starting material for components B$_1$) and B$_2$).

**3.** A catalyst as claimed in claim 1 or 2, obtainable by mixing component A) and component B$_1$) in the kneader and subjecting the resulting mixture to dry preliminary kneading at pH 7 to 11 and preferably at pH 8 to 10 to a residual moisture content of 3 to 12% by weight and preferably from 5 to 10% by weight before component B$_2$) is added.

**4.** A catalyst as claimed in claim 3, obtainable by precalcining the dry-prekneaded mixture of components A) and B$_1$) at temperatures of 400 to 700°C before component B$_2$) is added.

**5.** A catalyst as claimed in claims 1 to 3, obtainable by precalcining the paste consisting of components A), B$_1$) and B$_2$) at 300 to 800°C and preferably at 400 to 700°C before it is kneaded to a homogeneous kneaded paste.

6. A catalyst as claimed in claims 1 to 5, characterized in that components $B_1$) and $B_2$) are used in the form of a heteropoly acid or one of its salts, preferably the ammonium salts, the metals of groups $B_1$) and $B_2$) present in the heteropoly acid being present in an atomic ratio of 12 : 1 to 1 : 12.

7. A catalyst as claimed in claim 1 or 2, obtainable by leaving the starting material for component $B_2$) out of the kneading process and applying it by impregnation in the form of a salt or a heteropoly acid or one of its salts, preferably the ammonium salts, in aqueous solution to the preferably calcined catalyst precursor consisting of components A) and $B_1$).

8. A process for the production of a catalyst for the selective reduction of nitrogen oxides with ammonia containing the following components:
   A) titanium oxide
   $B_1$) at least one oxide of tungsten, silicon, boron, aluminium, phosphorus, zirconium, barium, yttrium, lanthanum, cerium and
   $B_2$) at least one oxide of vanadium, niobium, molybdenum, iron, copper,
   with an atomic ratio between the elements of components A) and B) of 1 : 0.001 to 1 and preferably 1 : 0.002 to 0.4, characterized in that it comprises the steps of intensively kneading kneading component A) in the form of a reactive high-surface titanium oxide having a BET surface of 40 to 500, preferably 50 to 300 and more preferably 75 to 150 m²/g, which is completely or predominantly present in the anatase modification, together with components $B_1$) and $B_2$), preferably their precursors, with addition of the additives typically used for the compression moulding or extrusion of ceramic pastes, moistening agents, supporting substances, binders, moulding aids and, optionally, pore-forming agents, to form a homogeneous kneaded paste, extruding the kneaded paste to mouldings, drying the mouldings with a gradual increase in temperature to at most 60°C and then calcining them with a stepwise increase in temperature in ambient air at final temperatures in the range from 300 to 800°C.

9. A process as claimed in claim 8, characterized in that hydroxides, oxides, salts or heteropoly acids or salts thereof, preferably ammonium salts, are used as starting material for components $B_1$) and $B_2$).

10. A process as claimed in claim 8 or 9, characterized in that component A) and component $B_1$) are mixed in the kneader and the resulting mixture is subjected to dry preliminary kneading at pH 7 to 11 and preferably at pH 8 to 10 to a residual moisture content of 3 to 12% by weight and preferably 5 to 10% by weight before component $B_2$) is added.

11. A process as claimed in claim 10, characterized in that the dry-prekneaded mixture of components A) and $B_1$) is precalcined at temperatures of 400 to 700°C before component $B_2$) is added.

12. A process as claimed in claims 8 to 10, characterized in that the paste consisting of components A), $B_1$) and $B_2$) is precalcined at 300 to 800°C and preferably at 400 to 700°C before it is kneaded to a homogeneous kneaded paste.

13. A process as claimed in claims 8 to 12, characterized in that components $B_1$) and $B_2$) are used in the form of a heteropoly acid or one of its salts, preferably the ammonium salts, the metals of groups $B_1$) and $B_2$) present in the heteropoly acid being present in an atomic ratio of 12 : 1 to 1 : 12.

14. A process as claimed in claim 8 or 9, characterized in that the starting material for component $B_2$) is left out of the kneading process and applied by impregnation in the form of a salt or a heteropoly acid or one of its salts, preferably the ammonium salts, in aqueous solution to the preferably calcined catalyst precursor consisting of components A) and $B_1$).

## Revendications

1. Catalyseur pour la réduction sélective d'oxydes d'azote par l'ammoniac, contenant les composants suivants :
   A) oxyde de titane,
   $B_1$) au moins un oxyde de tungstène, silicium, bore, aluminium, phosphore, zirconium, baryum, yttrium,

lanthane, cérium et

B$_2$) au moins un oxyde de vanadium, niobium, molybdène, fer, cuivre,

avec un rapport atomique entre les éléments des composants A) et B) allant de 1:0,001 à 1:1, de préférence de 1:0,002 à 1:0,4, préparable par malaxage énergique du composant A) sous forme d'un oxyde de titane réactif à grande surface spécifique, ayant une surface spécifique BET de 40 à 500, de préférence de 50 à 300, en particulier de 75 à 150 m$^2$/g, qui se trouve en majeure partie ou en totalité sous la forme d'anatase, conjointement avec les composants B$_1$) et B$_2$), de préférence leurs précurseurs, avec addition des additifs humectants, agents de renforcement, liants, auxiliaires de mise en forme et éventuellement agents porogènes, usuels pour une compression ou extrusion de matières céramiques, pour obtenir une masse malaxée homogène, extrusion de la masse malaxée en corps moulés, séchage des corps moulés, avec lente élévation de la température jusqu'au maximum 60°C, et ensuite calcination de ceux-ci à des températures situées dans la plage allant de 300 à 800°C, dans l'air environnant, avec élévation graduelle de la température.

2. Catalyseur selon la revendication 1, préparable par utilisation, en tant que produits de départ pour les composants B$_1$) et B$_2$) d'hydroxydes, d'oxydes, de sels ou d'hétéropolyacides ou de leurs sels, de préférence de sels d'ammonium.

3. Catalyseur selon la revendication 1 ou 2, préparable par mélange du composant A) et du composant B$_1$) dans le malaxeur et prémalaxage à sec à pH 7-11, de préférence 8-10, à une humidité résiduelle de 3-12, de préférence 5-10 % en poids, avant addition du composant B$_2$).

4. Catalyseur selon la revendication 3, préparable par précalcination à des températures de 400-700°C du mélange prémalaxé à sec des composants A) et B$_1$), avant addition du composant B$_2$).

5. Catalyseur selon les revendications 1 à 3, préparable par précalcination à 300-800, de préférence à 400-700°C, de la masse constituée des composants A), B$_1$) et B$_2$), avant malaxage de ceux-ci en une masse malaxée homogène.

6. Catalyseur selon les revendications 1 à 5, préparable par utilisation des composants B$_1$) et B$_2$ sous forme d'un hétéropolyacide ou d'un de ses sels, de préférence des sels d'ammonium, les métaux des groupes B$_1$) et B$_2$), présents dans l'hétéropolyacide, se trouvant dans un rapport atomique de 12:1 à 1:12.

7. Catalyseur selon la revendication 1 ou 2, préparable par le fait que le produit de départ pour le composant B$_2$) échappe au processus de malaxage et est introduit sous forme d'un sel ou d'un hétéropolyacide ou d'un de ses sels, de préférence des sels d'ammonium, en solution aqueuse, par imprégnation sur le précurseur de catalyseur constitué des composants A) et B$_1$), de préférence calciné.

8. Procédé pour la préparation d'un catalyseur pour la réduction sélective d'oxydes d'azote par l'ammoniac, contenant les composants suivants :

A) oxyde de titane,

B$_1$) au moins un oxyde de tungstène, silicium, bore, aluminium, phosphore, zirconium, baryum, yttrium, lanthane, cérium et

B$_2$) au moins un oxyde de vanadium, niobium, molybdène, fer, cuivre,

avec un rapport atomique entre les éléments des composants A) et B) allant de 1:0,001 à 1:1, de préférence de 1:0,002 à 1:0,4, caractérisé en ce qu'on malaxe énergiquement le composant A) sous forme d'un oxyde de titane réactif à grande surface spécifique, ayant une surface spécifique BET de 40 à 500, de préférence de 50 à 300, en particulier de 75 à 150 m$^2$/g, qui se trouve en majeure partie ou en totalité sous la forme d'anatase, conjointement avec les composants B$_1$) et B$_2$, de préférence leurs précurseurs, avec addition des additifs humectants, agents de renforcement, liants, auxiliaires de mise en forme et éventuellement agents porogènes, usuels pour une compression ou extrusion de matières céramiques, pour obtenir une masse malaxée homogène, on extrude la masse malaxée en corps moulés, on sèche les corps moulés à 60°C au maximum avec lente élévation de la température et ensuite on les calcine dans la plage de températures allant de 300 à 800°C, dans l'air environnant, avec élévation graduelle de la température.

9. Procédé selon la revendication 8, caractérisé en ce que, en tant que matériau de départ pour les composants B$_1$) et B$_2$), on utilise des hydroxydes, des oxydes, des sels ou des hétéropolyacides ou leurs sels, de préférence des sels d'ammonium.

**10.** Procédé selon la revendication 8 ou 9, caractérisé en ce qu'on mélange le composant A) et le composant $B_1$) dans le malaxeur et on les malaxe à sec, à pH 7-11, de préférence 8-10, jusqu'à une humidité résiduelle de 3-12, de préférence de 5-10 % en poids, avant l'addition du composant $B_2$).

**11.** Procédé selon la revendication 10, caractérisé en ce que le mélange prémalaxé à sec des composants A) et $B_1$) est précalciné à des températures de 400-700°C, avant addition du composant $B_2$).

**12.** Procédé selon les revendications 8 à 10, caractérisé en ce que la masse constituée des composants A), $B_1$) et $B_2$) est précalcinée à 300-800, de préférence 400-700°C, avant son malaxage en une masse malaxée homogène.

**13.** Procédé selon les revendications 8 à 12, caractérisé en ce que l'on utilise les composants $B_1$) et $B_2$) sous forme d'un hétéropolyacide ou d'un de ses sels, de préférence des sels d'ammonium, les métaux des groupes $B_1$) et $B_2$), présents dans l'hétéropolyacide, se trouvant dans un rapport atomique allant de 12:1 à 1:12.

**14.** Procédé selon la revendication 8 ou 9, caractérisé en ce que le produit de départ pour le composant $B_2$) échappe au processus de malaxage et est introduit sous forme d'un sel ou d'un hétéropolyacide ou d'un de ses sels, de préférence des sels d'ammonium, en solution aqueuse, par imprégnation sur le précurseur de catalyseur constitué des composants A) et $B_1$), de préférence calciné.

Fig. 1

□ Bsp. 1
○ Bsp. 6
△ Bsp. 13
✕ Vergleichsbeispiel 1

Fig. 2

**Fig. 3**